# EUROPÄISCHE PATENTSCHRIFT

(11) **EP 3 385 638 B1**
(45) Veröffentlichungstag und Bekanntmachung des Hinweises auf die Patenterteilung: **27.11.2019**
(21) Anmeldenummer: 18164935.1
(22) Anmeldetag: 29.03.2018
(51) Int. Cl.: F24S 80/30, F24S 10/40

(54) **SOLARKOLLEKTOR-SAMMELROHR, VERWENDUNG VON SOLARKOLLEKTOR-SAMMELROHREN UND SOLARKOLLEKTOR-BAUGRUPPE**
SOLAR COLLECTOR HEADER PIPE, USE OF SOLAR COLLECTOR HEADER PIPES AND SOLAR COLLECTOR MODULE
TUBE COLLECTEUR DU COLLECTEUR SOLAIRE, UTILISATION DE TUBES COLLECTEURS DU COLLECTEUR SOLAIRE ET ENSEMBLE DE COLLECTEUR SOLAIRE

(30) Priorität: 06.04.2017 DE 102017107458
(43) Veröffentlichungstag der Anmeldung: 10.10.2018
(73) Patentinhaber: Universität Kassel, 34125 Kassel (DE)
(72) Erfinder: WERNER, Florian, 34260 Kaufungen (DE); VAJEN, Klaus, 34125 Kassel (DE); HEINZEN, Roland, Paderborn 33100 (DE); OROZALIEV, Janybek, 34119 Kassel (DE)
(74) Vertreter: REHBERG HÜPPE + PARTNER

(56) Entgegenhaltungen:
- WO-A1-2013/106901
- DE-U1-202007 011 116
- FR-A1- 2 444 237
- US-A- 4 120 285
- US-A1- 2013 104 877

## Beschreibung

### TECHNISCHES GEBIET DER ERFINDUNG

Die Erfindung betrifft ein Solarkollektor-Sammelrohr. Derartige Solarkollektor-Sammelrohre sind Bestandteile eines Solarkollektors, welcher gemeinsam insbesondere mit Komponenten wie Pumpen, eine Regelung, eine Sicherungseinrichtung, ein Solarspeicher und die zugeordnete Hydraulik eine Solaranlage bilden kann. In einem Solarkollektor-Sammelrohr erfolgt die Übergabe von Wärme von Wärmeabsorptionselemente, welche infolge von solarer Einstrahlung auf das Wärmeabsorptionselement erzeugt worden ist, an ein einen Innenraum des Solarkollektor-Sammelrohrs durchströmendes Fluid.

Die vorliegende Erfindung betrifft auch eine Verwendung eines Solarkollektor-Sammelrohrs sowie eine Solarkollektor-Baugruppe mit einem Solarkollektor-Sammelrohr.

### STAND DER TECHNIK

Die Druckschrift DE 20 2007 011 116 U1 offenbart einen solarthermischen Kollektor, bei welchem Vakuumröhren über kugelförmig ausgebildete Anschlussköpfe an einem Sammelrohr befestigt sind, so dass der Winkel, unter welchem sich die Vakuumröhren von dem Sammelrohr erstrecken, variabel ist. Hierdurch sollen die architektonische Freiheit für das äußere Erscheinungsbild, ein je nach gewähltem Winkel optimaler Energieeinfang, eine Vermeidung eines Schnee- und Schmutzfangens auf Schrägdächern am Sammelrohr, ein Ausgleich unterschiedlicher thermischer Längenänderungen, eine Vervielfältigung der möglichen Anwendungen und eine Verbesserung der Austauschbarkeit der Vakuumröhren gewährleistet werden. Offenbart sind auch Ausführungsformen, bei welchen Paare von Vakuumröhren jeweils bei derselben Längserstreckung des Sammelrohrs auf beiden Seiten des Sammelrohrs angeordnet sind, wobei diese Paare von Vakuumröhren dann in der Querebene des Sammelrohrs entsprechend einem umgekehrtem V angeordnet sind mit Anordnung des Sammelrohrs im Verbindungsbereich der beiden Schenkel des V. Die solarthermischen Kollektoren gemäß DE 20 2007 011 116 U1 können Einsatz finden für eine Dach- oder Fassadenanlage.

Die Druckschrift KR 2013/0085694 A offenbart einen Solarkollektor mit evakuierten Rohren, die abgewinkelt sind, so dass ein horizontal ausgerichteter Teilbereich des Rohrs vereinfacht horizontal mit einem Kopf des Solarkollektors montiert werden kann, während der andere abgewinkelte Teil des Rohrs sich von dem Kopfteil mit einer Neigung von ca. 45° nach unten erstreckt. Hierbei sollen die Kondensatoren der evakuierten Rohre in einer größeren geodätischen Höhe angeordnet sein als die Verdampfer der evakuierten Rohre.

Die Druckschrift WO 2013/106901 A1 offenbart einen Solarkollektor, der einen zentralen Wärmespeicherbehälter aufweist, der hohlzylindrisch ausgebildet ist, der mit einem wärmespeichernden Material gefüllt ist und durch welchen sich ein fluidisch durchströmtes Rohr erstreckt. In parallelen Querebenen des zentralen Wärmespeicherbehälters sind an diesem Paare von Vakuumröhren gehalten, die ebenfalls mit einem wärmespeichernden Material gefüllt sein können. Bei dem wärmespeichernden Material kann es sich um ein Fluid, ein festes Material oder auch ein Phasenwechselmaterial handeln. Ein Transfer von durch die Vakuumröhren absorbierter solarer Wärme von den Vakuumröhren zu dem wärmespeichernden Material des zentralen Wärmespeicherbehälters erfolgt über zusätzliche Rohre zwischen den wärmeleitenden Materialien der Vakuumröhren und des zentralen Wärmespeicherbehälters. Das wärmespeichernde Material des zentralen Wärmespeicherbehälters gibt die Wärme dann an das Fluid weiter, welches das Rohr, welches sich durch den zentralen Wärmespeicherbehälter erstreckt, durchströmt. Ein Winkel zwischen einer Achse der Vakuumröhren und einer Achse des von dem Fluid durchströmten Rohres kann kleiner als 85° sein.

US 4,299,203 A offenbart einen Solarkollektor mit einem Solarkollektor-Sammelrohr, durch welches über einen Einlass sowie einen Auslass ein zu erwärmendes Fluid strömt. Das Solarkollektor-Sammelrohr weist über die Längsachse desselben verteilte, sacklochartige geschlossene Aufnahmen auf, die einen kreisförmigen Querschnitt aufweisen und deren Boden gewölbt ist. Die Aufnahmen verfügen an der in dem Solarkollektor-Sammelrohr angeordneten Mantelfläche über Rippen, welche den Wärmeaustausch zwischen den Aufnahmen und dem in dem Solarkollektor-Sammelrohr angeordneten Fluid verbessern sollen. In den Aufnahmen sind rohrförmige Solarkollektoren aufgenommen. Diese weisen ein äußeres Rohr sowie ein inneres Rohr auf, zwischen welchen ein Vakuum erzeugt ist. Zwischen dem Bodenbereich und dem Deckenbereich des Innenraums des inneren Rohrs erstreckt sich ein Fluidverteilrohr. Das äußere Rohr, das innere Rohr und das Fluidverteilrohr sind aus durchsichtigem Glas hergestellt, wobei das innere Rohr im Bereich der äußeren oder inneren Mantelfläche mit einer solare Energie absorbierenden Beschichtung, insbesondere aus schwarzem Chrom, Nickel, Blei, schwarzem Carbon oder einem Kupferoxid, beschichtet ist. Die Aufnahmen des Solarkollektor-Sammelrohrs zum Aufnehmen der Solarkollektoren sind so ausgerichtet, dass sich die darin angeordneten Solarkollektoren bei paralleler Orientierung zueinander nach unten erstrecken. Die Querschnitte der Aufnahmen sind derart gestaltet, dass ein sich aus dem äußeren Rohr heraus erstreckender Endbereich des inneren Rohrs in engem Kontakt mit der Aufnahme in die Aufnahme einsetzbar ist. Eine Sicherung des inneren Rohrs und damit des Solarkollektors in der Aufnahme erfolgt über einen O-Ring. Alternativ offenbart die Druckschrift US 4,299,203 A, dass das innere Rohr in dem genannten Endbereich ein Außengewinde aufweist, welches in ein Innengewinde der Aufnahme des Solarkollektor-Sammelrohrs einschraubbar ist. In dem inneren Rohr zirkuliert einerseits in dem Fluidverteilrohr und andererseits in dem Ringraum zwischen dem Fluidverteilrohr und dem inneren Rohr ein wärmeabsorbierendes Arbeitsfluid, bei dem es sich um Wasser, Silikon oder ein wärmeübertragendes Öl handeln kann. In dem Solarkollektor soll das Solarkollektor-Sammelrohr horizontal angeordnet sein, wobei die Solarkollektoren auch geneigt angeordnet sein können.

US 2013/0104877 A1 beschreibt zunächst aus dem Stand der Technik bekannte Solarkollektoren, bei welchen in ein Solarkollektor-Sammelrohr über die Längserstreckung mit gleichmäßigen Abständen angeordnete und parallel zueinander orientierte durch beide Seiten durchgehende Bohrungen eingebracht werden, in die dann Rohre eingesetzt werden, die mit dem Solarkollektor-Sammelrohr dicht verschweißt werden müssen. Die innere Oberfläche der Rohre ist mit einem wärmeleitenden Material beschichtet. In die beschichteten Rohre werden dann als "heat-pipes" ausgebildete Wärmeabsorptionselemente eingesetzt. Dieser Stand der Technik wird in der Druckschrift US 2013/0104877 A1 dahingehend kritisiert, dass die Herstellung derartiger Solarkollektoren kompliziert und zeitaufwändig ist. Des Weiteren wird kritisiert, dass die Wärmeübertragung zwischen den "heat-pipes" und dem das Solarkollektor-Sammelrohr durchströmenden Fluid nicht direkt erfolgt, sondern unter Zwischenschaltung der Rohre, womit der Wirkungsgrad der Wärmeübertragung nicht optimal ist. Vor diesem Hintergrund schlägt US 2013/0104877 A1 vor, ein kastenförmiges Solarkollektor-Sammelrohr im Bereich einer nach unten weisenden Seitenfläche mit abgestuften Durchgangsausnehmungen zu versehen, die den von dem Fluid durchströmten Innenraum des Solarkollektor-Sammelrohrs mit dem Außenbereich verbinden. Die Ausnehmungen verfügen hierbei über einen innenliegenden Absatz und ein außenliegendes Innengewinde. Mit dem Innengewinde kann ein Anschlussstutzen verschraubt werden, wobei mit dem Einschrauben des Anschlussstutzens in das Innengewinde ein Dichtring zwischen der Stirnseite des Anschlussstutzens und dem Absatz der Ausnehmung verspannt wird. Der Anschlussstutzen verfügt über eine Durchgangsausnehmung, so dass ein als "heat-pipe" ausgebildetes Wärmeabsorptionselement durch den Anschlussstutzen in den Innenraum des Solarkollektor-Sammelrohrs eingeführt werden kann. Eine Sicherung des Wärmeabsorptionselements gegenüber einem unerwünschten Austritt aus dem Solarkollektor-Sammelrohr erfolgt über die zwischen dem Absatz und der Stirnseite des Anschlussstutzens verspannte Dichtung, welche mit der Verspannung infolge des Einschraubens des Anschlussstutzens auch radial nach innen gegen die Mantelfläche des Wärmeabsorptionselements gepresst wird.

KR 10 2013 0 085 694 A offenbart einen Solarkollektor mit einem Solarkollektor-Sammelrohr und einem Wärmeabsorber, der als Vakuumröhre ausgebildet ist. Von einem Solarkollektor-Sammelrohr erstrecken sich die Wärmeabsorber in einer Draufsicht auf beiden Seiten V-förmig mit einem Winkel θ₁ der Wärmeabsorber gegenüber einer quer zur Längsachse des Solarkollektor-Sammelrohrs orientierten Ebene. Auch in einer Vorderansicht erstrecken sich die Wärmeabsorber auf beiden Seiten des Solarkollektor-Sammelrohrs V-förmig, hier mit einem Winkel θ₂, gegenüber der Erstreckungsebene gemäß der Draufsicht. Infolge der Winkel θ₁, θ₂ welche ungefähr 10 bis 20° betragen, soll eine Montage des Solarkollektors unter beliebiger Ausrichtung an einem Dach eines Hauses oder auch einer Wand des Hauses ermöglicht werden.

Weiterer Stand der Technik ist aus FR 2 873 191 A1, US 2001/0054419 A1 und US 2011/0253127 A1 bekannt.

### AUFGABE DER ERFINDUNG

Der Erfindung liegt die Aufgabe zugrunde, ein Solarkollektor-Sammelrohr vorzuschlagen, welches insbesondere hinsichtlich
- der Verbindung mit einem Wärmeabsorptionselement,
- der Montage und/oder Demontage eines Wärmeabsorptionselements,
- der Sicherheit gegenüber einem Austritt von Fluid,
- dem Wärmeübergang von einem Wärmeabsorptionselement zu dem das Solarkollektor-Sammelrohr durchströmenden Fluid,
- der Fertigung des Solarkollektor-Sammelrohrs,
- der Vervielfältigung der Einsatzmöglichkeiten des Solarkollektor-Sammelrohrs,
- des Leitungsaufwands für mindestens ein Solarkollektor-Sammelrohr einer Solaranlage bei einer vorgegebenen Fläche, welche mit Wärmeabsorptionselementen überdeckt sein soll, und/oder
- der Nutzung für eine Solaranlage in Ausbildung als sogenanntes "Drain-Back-System"
verbessert ist. Des Weiteren liegt der Erfindung die Aufgabe zugrunde, eine unter Umständen entsprechend verbesserte neue Verwendung von Solarkollektor-Sammelrohren vorzuschlagen. Schließlich liegt der Erfindung die Aufgabe zugrunde, eine entsprechend verbesserte Solarkollektor-Baugruppe vorzuschlagen.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Das erfindungsgemäße Solarkollektor-Sammelrohr weist einen Rohrkörper auf. Eine Wandung des Rohrkörpers begrenzt einen Innenraum. In den Innenraum münden sowohl ein Einlass als auch ein Auslass des Rohrkörpers. Somit kann ein zu erwärmendes Fluid von dem Einlass den Innenraum zu dem Auslass (temporär oder kontinuierlich) durchströmen.

Des Weiteren weist das Solarkollektor-Sammelrohr mehrere Aufnahmen für Wärmeabsorptionselemente auf. Die Aufnahmen sind in Richtung einer Längsachse x verteilt an dem Rohrkörper angeordnet, so dass das den Innenraum des Rohrkörpers durchströmende Fluid sukzessive an den Aufnahmen mit den Wärmeabsorptionselementen entlang strömen kann und sukzessive erwärmt werden kann.

Erfindungsgemäß weisen die Aufnahmen eine Hülse auf, welche eine beliebige Querschnittsgeometrie sowie auch einen beliebigen Längsschnitt aufweisen kann. Zwecks Vereinfachung, aber ohne Beschränkung hierauf, wird im Folgenden teilweise auf die Ausbildung der Hülse als hohlzylindrische Hülse Bezug genommen.

Die Hülse erstreckt sich unter Abdichtung durch mindestens eine Öffnung der Wandung des Rohrkörpers, so dass vermieden ist, dass Fluid aus dem Innenraum des Rohrkörpers (bspw. über einen verbleibenden Spalt zwischen der Außenfläche der Hülse und der Öffnung der Wandung) austreten kann. Des Weiteren ist die Hülse (auf beliebige Weise) an der Wandung des Rohrkörpers befestigt. Die Hülse weist eine Einführ-Ausnehmung auf, bei welcher es sich für das Beispiel einer hohlzylindrischen Hülse um die Innenbohrung der hohlzylindrischen Hülse handelt. Erfindungsgemäß weist die Einführ-Ausnehmung eine Geometrie auf, die korrespondierend zu der Geometrie des Wärmeabsorptionselements in einem Einführbereich des Wärmeabsorptionselements ausgebildet ist. Hierbei wird unter "korrespondierend" jede Geometrie verstanden, welche
- ein Einführen des Wärmeabsorptionselements in die Einführ-Ausnehmung ermöglicht,
- während der Einführbewegung eine Führung des Wärmeabsorptionselements relativ zu der Hülse ermöglicht und/oder
- in eingeführtem Zustand eine Ausrichtung des Wärmeabsorptionselements vorgibt.

Möglich ist sogar, dass die Geometrien passgenau ausgebildet sind, so dass infolge der korrespondierenden Geometrien die Einführ-Ausnehmung und die Außenfläche des Wärmeabsorptionselements eine Spiel-, Übergangs- oder Presspassung ausbilden. Für die Verwendung einer Presspassung kann sogar das Wärmeabsorptionselement über die infolge der Presspassung entstehenden Verpressung oder die wirkende Reibung in der Einführ-Ausnehmung gehalten werden.

Erfindungsgemäß ist die Einführ-Ausnehmung nach außen offen, womit ermöglicht ist, dass in diese von außen das Wärmeabsorptionselement einführbar ist.

Schließlich ist für die erfindungsgemäße Ausgestaltung die Einführ-Ausnehmung fluidisch von dem Innenraum entkoppelt. Dies wird auch als "trockene Verbindung" bezeichnet, da auf diese Weise ein Austritt von Fluid aus dem Innenraum über die Einführ-Ausnehmung unmöglich ist selbst für den Fall, dass in der Einführ-Ausnehmung kein Wärmeabsorptionselement angeordnet ist. Dies ist insbesondere vorteilhaft, wenn ein Innenraum des Rohrkörpers bereits befüllt werden soll, bevor die Wärmeabsorptionselement in die Einführ-Ausnehmungen eingebracht werden, sowie auch für den Fall, dass mit befülltem Innenraum des Rohrkörpers eine Auswechslung mindestens eines bspw. defekten Wärmeabsorptionselements erfolgen soll.

Erfindungsgemäß ist eine Längsachse der Einführ-Ausnehmung somit sowohl in der x-y-Ebene unter einem Winkel α als auch in der y-z-Ebene unter einem Winkel β geneigt. Dies hat zur Folge, dass dasselbe Solarkollektor-Sammelrohr mit in den Einführ-Ausnehmungen angeordneten Wärmeabsorptionselementen ohne konstruktive Veränderungen sowohl für eine vertikale Montage an einer Fassade eines Gebäudes als auch für eine horizontale Montage bspw. auf einem Flachdach eines Gebäudes verwendet werden kann und für beide Montageausrichtungen ein schwerkraftgetriebener Betrieb der Wärmeabsorptionselemente gewährleistet werden kann. Auch beliebige Winkel zwischen einer horizontalen und einer vertikalen Montage sind möglich, ohne dass eine schwerkraftbetriebene Arbeitsweise der Wärmeabsorptionselemente nicht mehr möglich wäre.

Der Winkel α, der Winkel β oder sowohl der Winkel α als auch der Winkel β kann/können größer als 0° und kleiner als 10° sein und bspw. im Bereich von 0,2° bis 5° oder 0,3° bis 3° liegen.

Erfindungsgemäß sind in dem Solarkollektor-Sammelrohr zwei Reihen von Einführ-Ausnehmungen auf gegenüberliegenden Seiten des Rohrkörpers angeordnet. Somit können sich von einem einzigen Solarkollektor-Sammelrohr auf beiden Seiten Wärmeabsorptionselemente erstrecken, so dass ein Solarkollektor-Sammelrohr für die Überdeckung einer Fläche mit Wärmeabsorptionselementen verwendet werden kann, die doppelt so groß ist wie die Fläche, welche überdeckt werden kann, wenn Wärmeabsorptionselemente lediglich in einer Reihe auf einer Seite des Solarkollektor-Sammelrohrs angeordnet sind. Hierdurch reduziert sich die Zahl der erforderlichen Solarkollektor-Sammelrohre und es können etwaige Verbindungselemente zwischen benachbarten Solarkollektor-Sammelrohren eingespart werden.

Möglich ist durchaus, dass in den beiden Reihen der Einführ-Ausnehmungen die Einführ-Ausnehmungen bei derselben Längserstreckung des Sammelrohrs angeordnet sind. In diesem Fall kann sich das Fluid in dem Innenraum aufteilen in einen Teilstrom, welcher den Kondensator eines Wärmeabsorptionselements auf einer Seite umströmt, sowie einen Teilstrom, welcher den Kondensator des zugeordneten Wärmeabsorptionselements auf der anderen Seite umströmt.

Für eine Variante der Erfindung sind die Hülsen abgewinkelt sind. Die Hülsen weisen Hülsenteile auf, die gegenüber der Querachse y jeweils um den Winkel β abgewinkelt sind, wobei die Hülsen jeweils auf unterschiedlichen Seiten des Rohrköpers mit einem Hülsenteil eine Aufnahme mit einer Einführ-Ausnehmung bilden, so dass von beiden Seiten jeweils ein Wärmeabsorptionselement in die abgewinkelte Hülse eingeschoben werden kann. Die derart in die Einführ-Ausnehmungen von den unterschiedlichen Seiten eingeschobenen und hierin gehaltenen Wärmeabsorptionselemente erstrecken sich in diesem Fall allenfalls bis zur Mitte der Axialerstreckung der Hülsen, also bis zu der Abwinklung der Hülse, womit eine Art Kollision der Wärmeabsorptionselemente der unterschiedlichen Reihen vermieden ist, selbst wenn diese bei derselben Längserstreckung des Rohrkörpers angeordnet sind.

Für eine andere Variante der Erfindung sind die beiden Reihen in Richtung der Längsachse x versetzt zueinander angeordnet. Dies kann unter Umständen zu verbesserten Bauraumgestaltungen führen, wobei bspw. auch möglich ist, dass in Richtung der Längsachse die in den Innenraum des Rohrkörpers ragenden Endbereich der Hülsen der beiden Reihen eine Überlappung aufweisen, was dann zur Folge hat, dass das Fluid sukzessive ohne zwingende erforderliche Aufteilung in zwei Teilströme die Kondensatoren der Wärmeabsorptionselemente beider Reihen umströmen können.

Grundsätzlich kann in den Aufnahmen ein beliebiges Wärmeabsorptionselement eingesetzt sein, wobei eine beliebige Geometrie des Wärmeabsorptionselements im Längsschnitt und/oder im Querschnitt sowie auch ein beliebiges Funktionsprinzip des Wärmeabsorptionselements Einsatz finden kann.

Für einen Vorschlag der Erfindung ist die Aufnahme des Solarkollektor-Sammelrohrs für die Aufnahme eines Wärmeabsorptionselements in Ausbildung als Vakuumröhre bestimmt. Bei einer Vakuumröhre befindet sich der Absorber innerhalb einer durch Vakuum thermisch isolierten Glasröhre. Der Absorber kann dann entweder als beschichtete doppelwandige Glasröhre (sogenannte "Sydney-Röhren") oder mittels einer beschichteten Metallfinne innerhalb einer evakuierten einwandigen Glasröhre ausgeführt sein. Beispielsweise über ein Wärmeleitblech oder eine Finne wird dann die absorbierte Wärme einem Verdampfer eines Wärmerohrs zugeführt, indem die Wärme dann zu einem Kondensator übertragen wird. Der Kondensator erstreckt sich in die Einführ-Ausnehmung der Hülse und damit (unter Abdichtung) in den Rohrkörper hinein, womit der Verdampfer über die Hülse die Wärme an das den Rohrkörper durchströmende Fluid übertragen kann.

Alternativ können als Wärmeabsorptionselemente solare Wärmerohre Einsatz finden. Diese können aus zwei rohrförmigen Kupferteilen bestehen, die bspw. miteinander verlötet sind. Infolge der solaren Einstrahlung wird Wärme entlang des Verdampfers vom Absorber in das Wärmerohr geleitet. Innerhalb des Wärmerohrs befindet sich ein Fluid, welches durch die Erwärmung im Verdampfer verdampft und in Richtung des Kondensators strömt, wo dann die Wärme über die Hülse an das den Rohrkörper durchströmende Fluid abgegeben werden kann. Derartige Wärmerohre arbeiten vorzugsweise schwerkraftgetrieben. Hierbei steigt das erwärmte und verdampfte Fluid zu dem in einer höheren geodätischen Höhe angeordneten Kondensator hoch. Nach dem Kondensieren und der damit verbundenen Abkühlung kann das Fluid dann infolge der Schwerkraft wieder in den Bereich des Verdampfers zurückkehren. Schwerkraftgetriebene herkömmliche Wärmerohre müssen um mindestens 15°, neuere Wärmerohre mit einer sehr geringen Neigung im Bereich von 0 bis 3° gegenüber der Horizontalen geneigt sein, damit der Verdampfer in einer kleineren geodätischen Höhe angeordnet ist als der Kondensator.

Für die fluidische Entkopplung der Einführ-Ausnehmung der Hülse von dem Innenraum gibt es vielfältige Möglichkeiten. Für einen Vorschlag der Erfindung erfolgt diese Entkopplung dadurch, dass die Hülse in einem in dem Innenraum angeordneten Endbereich mit einem Verschluss geschlossen ist. Für das Beispiel der hohlzylindrischen Hülse ist somit die Hülse in einem Endbereich mit einem Verschlussstopfen, Deckel oder beliebigen anderweitigen Verschluss geschlossen. Infolge des Verschlusses kann somit ausgeschlossen werden, das ein im Innenraum des Rohrkörpers angeordneter Endbereich der Hülse von dem Fluid durchströmt wird, welches dann über die Einführ-Ausnehmung nach außen austreten könnte. Dies gilt selbst dann, wenn in der Hülse kein Wärmeabsorptionselement angeordnet ist.

Für einen anderen Vorschlag der Erfindung erfolgt die fluidische Entkopplung der Einführ-Ausnehmung der Hülse von dem Innenraum dadurch, dass sich die Hülse von einer Seite des Rohrkörpers durch eine Öffnung des Rohrkörpers in den Innenraum erstreckt. Die Hülse erstreckt sich dann quer zur Längsachse des Rohrkörpers durch den Innenraum und tritt auf einer gegenüberliegenden Seite durch eine Öffnung des Rohrkörpers wieder aus dem Rohrkörper heraus. Somit durchsetzt die Hülse den Rohrkörper, ohne dass eine dann unter Umständen auch auf beiden Seiten offene Einführ-Ausnehmung der Hülse dann fluidisch mit dem Innenraum verbunden ist. Auch in diesem Fall kann eine beliebig geformte Hülse, bspw. auch eine hinsichtlich der Längsachse abgewinkelte Hülse Einsatz finden, wobei in diesem Fall möglich ist, dass eine abgewinkelte Hülse jeweils mit jedem abgewinkelten Teilbereich eine Einführ-Ausnehmung bildet, so dass in eine derartige Hülse auch von gegenüberliegenden Seiten zwei Wärmeabsorptionselemente eingeführt werden können.

Für die Befestigung der Hülsen an den Rohrkörper gibt es vielfältige Möglichkeiten, wobei es sich um eine permanente Befestigung handeln kann, welche nur durch eine Zerstörung beseitigt werden kann, oder auch eine lösbare Befestigung, welche ein Auswechseln ermöglicht. In bevorzugter Ausgestaltung der Erfindung erfolgt die Befestigung der Hülsen an dem Rohrkörper über ein Verlöten, eine Verschweißung, eine Klebeverbindung, eine Pressverbindung und/oder eine Klemmverbindung.

Grundsätzlich kann der Rohrkörper einen beliebigen Querschnitt, insbesondere einen Kreisringquerschnitt, einen ovalen, eckigen oder quadratischen oder rechteckigen Querschnitt, aufweisen. Des Weiteren kann der Querschnitt des Rohrkörpers in Richtung der Längsachse konstant sein oder sich beliebig ändern. Für einen Vorschlag der Erfindung ist der Rohrkörper in mindestens einem Endbereich verjüngt ausgebildet, was einen verbesserten Anschluss an benachbarte fluidische Komponenten ermöglichen kann und/oder eine verbesserte Verbindung des Rohrkörpers im Bereich der verjüngten Endbereiche mit einer Tragkonstruktion ermöglicht.

Eine weitere Lösung der der Erfindung zugrunde liegenden Aufgabe ist gegeben durch eine Verwendung von Solarkollektor-Sammelrohren, wie diese zuvor beschrieben worden sind. In diesem Fall sind die Solarkollektor-Sammelrohre baugleich hergestellt, so dass diese mit verringerten Herstellungskosten hergestellt werden können und mit einem geringen Aufwand bevorratet und bereitgestellt werden können. In diesem Fall verfügen die Längsachsen der Einführ-Ausnehmungen der Solarkollektor-Sammelrohre sowohl über den zuvor erläuterten Winkel α als auch über den zuvor erläuterten Winkel β. In diesem Fall können die baugleichen Solarkollektor-Sammelrohre multifunktional verwendet werden, nämlich einerseits für eine Montage mit (ungefähr, d. h. einem Winkel, der maximal 10° von der horizontalen Ausrichtung abweicht) horizontaler Ausrichtung der Längsachse x des Rohrkörpers des Solarkollektor-Sammelrohrs als auch für eine Montage mit (ungefähr, d. h. maximal um 10° von einer vertikaler Ausrichtung abweichenden) vertikaler Ausrichtung der Längsachse x des Rohrkörpers des Solarkollektor-Sammelrohrs.

Eine weitere Lösung der der Erfindung zugrunde liegenden Aufgabe ist gegeben durch eine Solarkollektor-Baugruppe. Diese weist einerseits (mindestens) ein Solarkollektor-Sammelrohr auf, wie dieses zuvor beschrieben worden ist. Des Weiteren sind bei der erfindungsgemäßen Solarkollektor-Baugruppe in den Hülsen des mindestens einen Solarkollektor-Sammelrohrs Wärmeabsorptionselemente, insbesondere Vakuumröhren oder Wärmerohre, angeordnet.

Grundsätzlich kann die Solarkollektor-Baugruppe auf beliebige Weise mit anderen Komponenten verbunden sein oder auch in diese eingebettet sein. Für eine besondere erfindungsgemäße Solarkollektor-Baugruppe ist das Solarkollektor-Sammelrohr in einem Gehäuse aufgenommen. In diesem Fall erstrecken sich die in den Hülsen des Solarkollektor-Sammelrohrs aufgenommenen Wärmeabsorptionselemente durch Öffnungen des Gehäuses hindurch nach außen, wo diese dann der solaren Strahlung ausgesetzt werden. Möglich ist, dass das Gehäuse, insbesondere im Bereich der gegenüberliegenden Stirnseiten, einen Einlass und einen Auslass aufweist, um das Fluid in das Gehäuse und hier in das Solarkollektor-Sammelrohr einzuführen und dieses nach der Erwärmung wieder herauszuführen. Das Gehäuse kann vielfältigen Zwecken dienen. Beispielsweise kann das Gehäuse das Solarkollektor-Sammelrohr und den Verbindungsbereich mit den Wärmeabsorptionselementen gegenüber mechanischen Beeinträchtigungen schützen.

Für einen weiteren Vorschlag der Erfindung ist zwischen dem Solarkollektor-Sammelrohr und dem Gehäuse ein isolierendes Material angeordnet. Auf diese Weise kann der Wirkungsgrad der Solarkollektor-Baugruppe verbessert werden.

In modernen Solaranlagen finden immer öfter sogenannte "Drain-Back-Systeme" Einsatz, bei welchen das zirkulierende Fluid, welches die Wärme der Wärmeabsorptionselemente aufnimmt, (unter Umständen auch ohne Betrieb einer Pumpe) aus dem Kollektor entleert werden soll und in einen Speicher zurückfließen soll. Sind auf diese Weise die Kollektoren und zugeordneten Leitungen entleert und mit Luft gefüllt, können Beschädigungen des Kollektors und der Leitungen bei Frost oder auch infolge einer Überhitzung des Fluids vermieden werden. Um ein derartiges Entleeren zu ermöglichen, kann gewünscht sein, dass das Fluid infolge der Schwerkraft in den Speicher zurückfließt. Hierzu ist es bekannt, dass die Leitungen und auch ein Solarkollektor-Sammelrohr mit einem Gefälle, welches bspw. im Bereich von 0,34 bis 5° liegen kann, montiert wird.

Die Erfindung schlägt eine Ausführungsform vor, bei der mehrere Solarkollektor-Sammelrohre der zuvor erläuterten Art in fluidischer Reihenschaltung angeordnet sind. Hierbei sind die einzelnen Solarkollektor-Sammelrohre jeweils unter einem Winkel γ gegenüber der Horizontalen angeordnet, wobei der Winkel γ kleiner ist als 10°, insbesondere kleiner ist als 5° oder 3° oder 2°. Erfindungsgemäß wird vorgeschlagen, dass benachbarte Solarkollektor-Sammelrohre nicht "koaxial" zueinander angeordnet sind, sondern diese vielmehr (unter Umständen durchaus bei paralleler Ausrichtung) mit einem Höhenversatz zueinander angeordnet sind. Der Höhenversatz wird dann durch ein fluidisches Verbindungselement, insbesondere eine Leitung, einen Schlauch oder ein Wellrohr, überbrückt. Hierbei ist der Höhenversatz in dieselbe Fließrichtung orientiert wie eine etwaige Neigung der Solarkollektor-Sammelrohre. Im Bereich der Überbrückung des Höhenversatzes wird außerhalb der Solarkollektor-Sammelrohre infolge der Gewichtskraft das Fluid nach unten beschleunigt, was dann auch die Förderwirkung des Fluids in den benachbarten Solarkollektor-Sammelrohren unterstützt, so dass der Drain-Back-Effekt verbessert ist.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schematisch ein Wärmeabsorptionselement, welches hier als solares Wärmerohr ausgebildet ist.
- **Fig. 2**: zeigt in einer räumlichen Ansicht ein Solarkollektor-Sammelrohr.
- **Fig. 3**: zeigt in einer Seitenansicht einen Abschnitt eines Solarkollektor-Sammelrohrs gemäß Fig. 2.
- **Fig. 4**: zeigt den Abschnitt des Solarkollektor-Sammelrohrs gemäß Fig. 3 in einer Draufsicht.
- **Fig. 5**: zeigt das Solarkollektor-Sammelrohr gemäß Fig. 2 bis 4 in einer Vorderansicht.
- **Fig. 6**: zeigt eine Verwendung baugleicher Solarkollektor-Sammelrohre (mit zugeordneten Wärmeabsorptionselementen) mit vertikaler Ausrichtung an einer Fassade, schräger Ausrichtung an einem Schrägdach sowie horizontaler Ausrichtung an einem Flachdach.
- **Fig. 7**: zeigt in einer Vorderansicht eine weitere Ausgestaltung eines Solarkollektor-Sammelrohrs mit abgewinkelten Hülsen.
- **Fig. 8**: zeigt in einer Vorderansicht eine weitere Ausgestaltung eines Solarkollektor-Sammelrohrs mit sich von beiden Seiten in den Rohrkörper erstreckenden, endseitig geschlossenen Hülsen.
- **Fig. 9**: zeigt in einer räumlichen Darstellung ein Gehäuse einer Solarkollektor-Baugruppe.
- **Fig. 10**: zeigt in teilgeschnittener räumlicher Darstellung das Gehäuse gemäß Fig. 9 mit darin angeordnetem thermischem Isoliermaterial und darin angeordnetem Solarkollektor-Sammelrohr.
- **Fig. 11**: zeigt ein Gebäude mit einem Solarkollektor mit mehreren fluidisch in Reihenschaltung angeordneten Solarkollektor-Sammelrohren.

### FIGURENBESCHREIBUNG

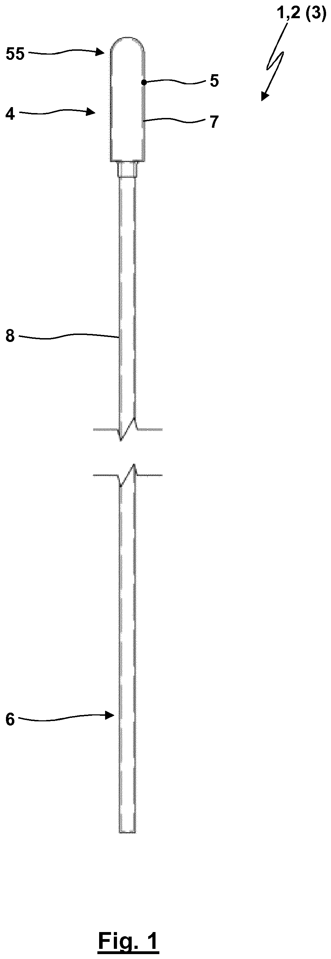

**Fig. 1** zeigt stark schematisiert ein Wärmeabsorptionselement 1, welches hier als solares Wärmerohr 2 ausgebildet ist. Durchaus möglich ist aber auch, dass das Wärmeabsorptionselement 1 eine Vakuumröhre 3 ist. In einem Endbereich, welcher vorzugsweise im Betrieb des Wärmeabsorptionselements 1 am höchsten Punkt angeordnet ist, bildet das Wärmeabsorptionselement 1 einen Kondensator 4 aus. Der Kondensator 4 verfügt hier bspw. über eine zylindrische Mantelfläche 5. Zumindest abseits des Kondensators 4 wird das Wärmeabsorptionselement 1 für dessen Betrieb mit der Sonneneinstrahlung beaufschlagt. Hier bildet das Wärmeabsorptionselement 1 einen Verdampfer 6, im Bereich dessen die Sonneneinstrahlung absorbiert wird und zum Verdampfen eines Fluids führt. Das erwärmte und verdampfte Fluid bewegt sich zu dem Kondensator 4, wo eine Kondensation erfolgt mit der Abgabe der Wärme, welche dann über die Mantelfläche 5 abgeführt wird. Das kondensierte und abgekühlte Fluid gelangt dann infolge der Schwerkraft wieder zurück zu dem Verdampfer. Möglich ist, dass für die Ausbildung des Wärmeabsorptionselements 1 als Wärmerohr 2 der Kondensator 4 und der Verdampfer 6 jeweils mit einem Kupferrohr 7, 8 gebildet sind, die miteinander verlötet sind.

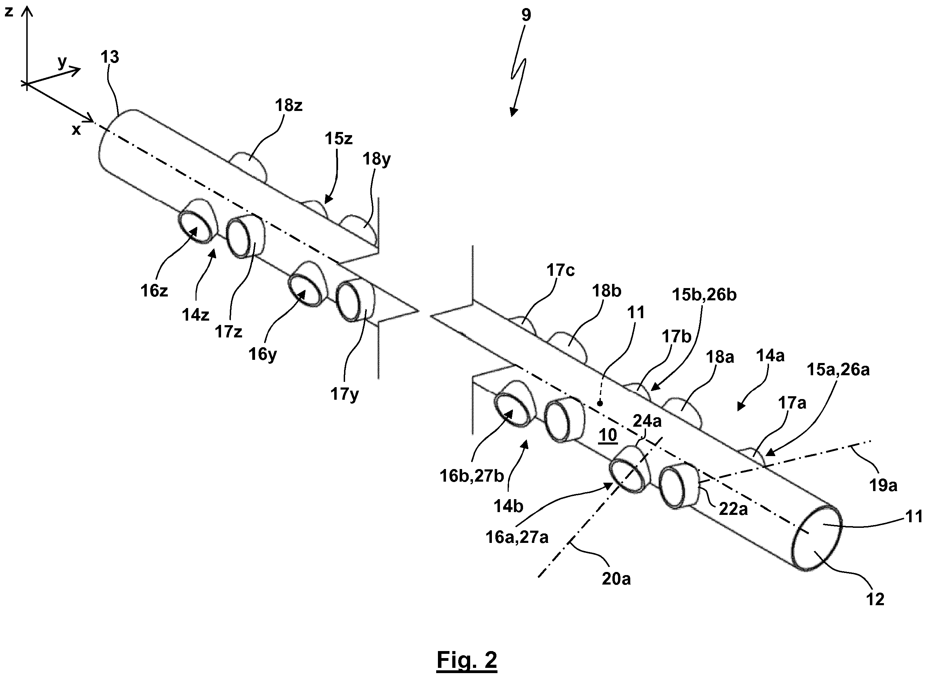

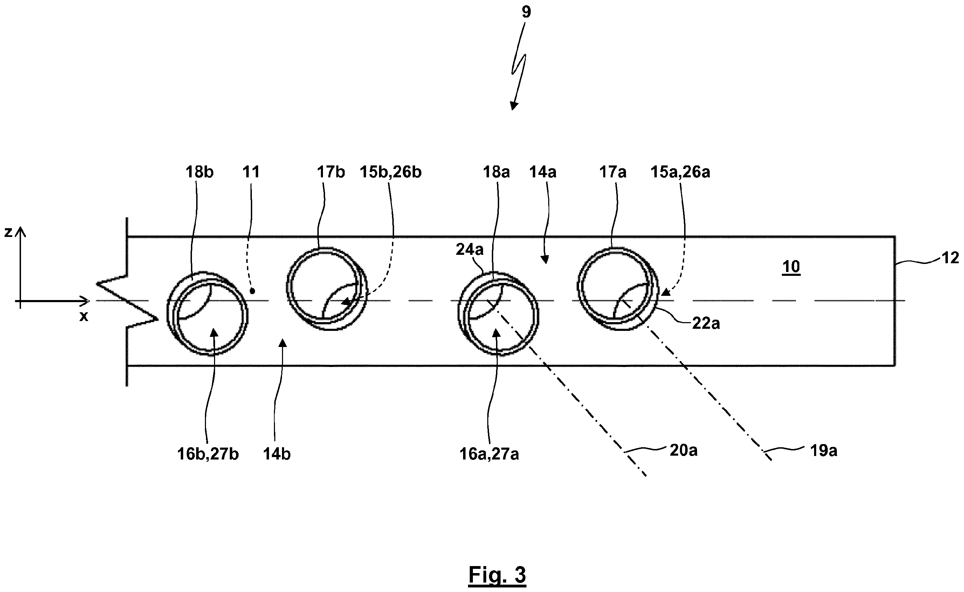

Die **Fig. 2 bis 5** zeigen ein Solarkollektor-Sammelrohr 9. Das Solarkollektor-Sammelrohr 9 weist einen Rohrkörper 10 auf, welcher hier hohlzylindrisch ausgebildet ist und eine Wandung 54 aufweist. Der Rohrkörper 10 verfügt über einen Innenraum 11, in welchen ein endseitiger Einlass 12 und ein in dem anderen Endbereich angeordneter Auslass 13 münden. Der Innenraum 11 wird von einem zu erwärmenden Fluid durchströmt. Im Bereich des Einlasses 12 und des Auslasses 13 kann das Solarkollektor-Sammelrohr in einen fluidischen Kreislauf der Solaranlage eingebunden sein und hierzu fluidisch mit benachbarten Leitungen, Bauelementen und u. U. auch einem weiteren Solarkollektor-Sammelrohr 9 verbunden werden, was über bekannte Verbindungstechnologien wie Verschraubungen, Flansche, Stecker, Schläuche mit Schellen u. ä. erfolgen kann.

Das Solarkollektor-Sammelrohr 9 verfügt über eine Vielzahl von Paaren 14 von Aufnahmen 15, 16. In den Fig. sind die einzelnen Aufnahmen 15a, 15b, ... sowie 16a, 16b, ... der Paare 14a, 14b, ... mit den zusätzlichen Buchstaben a, b, ... gekennzeichnet. Die Aufnahmen 15, 16 sind jeweils mit einer Hülse 17, 18 gebildet. Für das dargestellte Ausführungsbeispiel sind die Hülsen 17, 18 als Rohre mit konstantem Kreisringquerschnitt ausgebildet. Die Hülsen 17, 18 verfügen hier über eine Länge, die größer ist als der Durchmesser des Rohrkörpers 10. Der Rohrkörper 10 (und dessen Wandung 54) verfügt über Öffnungen 21, 22, 23, 24, die paarweise in Richtung von Längsachsen 19, 20 der Hülsen 17, 18 fluchtend und auf gegenüberliegenden Seiten des Rohrkörpers 10 angeordnet sind. Dies ist in den Fig. vorrangig für das Paar 14a der Aufnahmen 15a, 16a dargestellt, wobei das Entsprechende auch für die anderen Paare 14b, 14c, ... gilt. Durch die zugeordneten Öffnungen 21, 22 bzw. 23, 24 erstrecken sich die Hülsen 17, 18 derart, dass sich diese durch den Innenraum 11 des Rohrkörpers 10 erstrecken und auf beiden Seiten aus dem Rohrkörper 10 herausstehen.

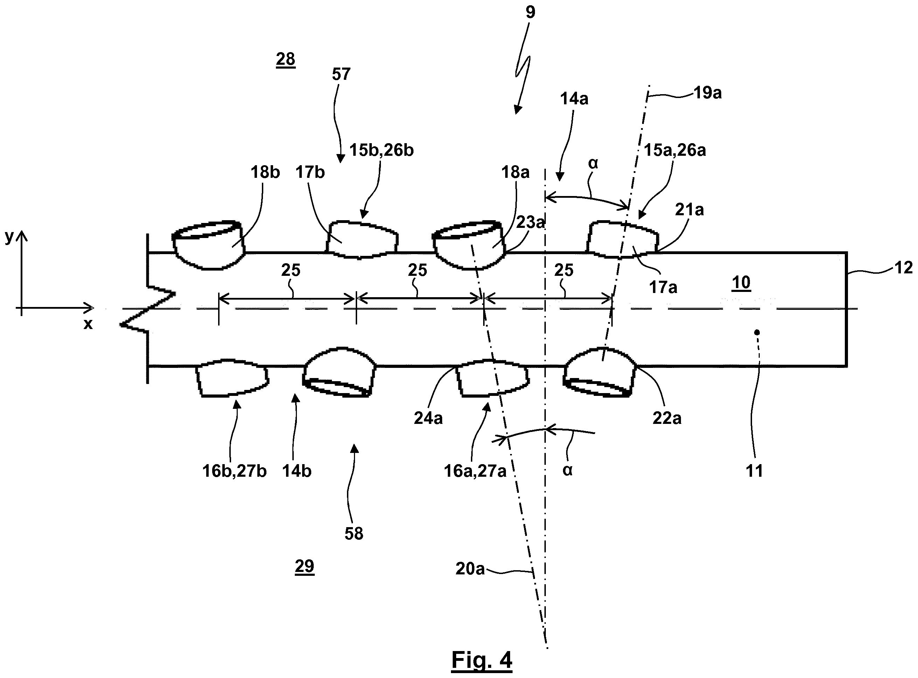

Die Hülsen 17, 18 sind im Bereich der Öffnungen 21, 22, 23, 24 an dem Rohrkörper 10 unter Abdichtung befestigt, was durch Löten, Kleben, Verschweißen oder beliebige andere Befestigungstechniken erfolgen kann. Die Hülsen 17, 18 sind mit gleichen Abständen 25 über die Längsachse x des Rohrkörpers 10 verteilt angeordnet (vgl. Fig. 4), wobei aber auch ungleichmäßige Abstände möglich sind.

Die Hülsen 17, 18 bilden Einführ-Ausnehmungen 26, 27. In die Einführ-Ausnehmungen 26, 27 sind Wärmeabsorptionselemente 1, insbesondere Wärmerohre 2, mit ihren im Bereich des Kondensators 4 gebildeten Einführbereichen 55 so einführbar, dass der Kondensator 4 in den Hülsen 17, 18 aufgenommen und gehalten ist mit Ausrichtung der Wärmeabsorptionselemente 1 entlang der Längsachse 19, 20. Die Wechselwirkung zwischen den Einführbereichen 55 der Wärmeabsorptionselemente 1 und den Hülsen 17, 18 dient insbesondere
- einer Führung während des Einführens des Wärmeabsorptionselements 1 in die Hülse 17, 18,
- einem Schutz des Wärmeabsorptionselements 1 im Bereich des Kondensators 4 durch die Hülsen 17, 18,
- einer Vorgabe der Orientierung des Wärmeabsorptionselements 1 gegenüber dem Solarkollektor-Sammelrohr 9,
- einer Befestigung des Wärmeabsorptionselements 1 an der Hülse 17, 18 und damit an dem Solarkollektor-Sammelrohr 9 und/oder
- der Übergabe von Wärme von dem Kondensator 4 des Wärmeabsorptionselements 1 an die Hülse 17, 18 und damit an das das Solarkollektor-Sammelrohr 9 durchströmende Fluid.

Hierbei werden für das dargestellte Ausführungsbeispiel die Wärmeabsorptionselemente 1 von unterschiedlichen Seiten und in unterschiedlichen (u. U. zueinander geneigten) Halbebenen 28, 29 in die Einführ-Ausnehmungen 26, 27 der Hülsen 17, 18 eingeschoben, was für die Ansicht gemäß Fig. 4 in die Einführ-Ausnehmungen 26 von oben erfolgt, während dies für die Einführ-Ausnehmungen 27 in Fig. 4 von unten erfolgt. Hierbei erstreckt sich in montiertem Zustand das Wärmeabsorptionselement 1 lediglich auf einer Seite mit dem Verdampfer 6 aus den Einführ-Ausnehmungen 26, 27, wobei aber auch möglich ist, dass der dem Verdampfer 6 abgewandte Endbereich des Wärmeabsorptionselements 1 auch geringfügig aus der Hülse 17, 18 auf der anderen Seite heraussteht.

Um einen guten Wärmetransport zwischen dem Kondensator 4 und den Hülsen 17, 18 und damit zu dem den Innenraum 11 des Rohrkörpers 10 durchströmenden Fluid zu gewährleisten, verfügen die Einführ-Ausnehmung 26, 27, also der Innenquerschnitt der Hülsen 17, 18, und die Mantelfläche 5 des Kondensators 4 des Wärmeabsorptionselements 1 über korrespondierende Querschnitte, so dass sich eine möglichst große Kontaktfläche zwischen der Mantelfläche 5 des Kondensators 4 und der Innenfläche der Hülse 17, 18 ergibt. Möglich ist, dass auch eine wärmeübertragende Kontaktpaste zwischen der Mantelfläche 5 des Kondensators 4 und den Hülsen 17, 18 angeordnet ist. Die Befestigung des Wärmeabsorptionselements 1 in der Hülse 17, 18 kann bspw. durch eine Klemmverbindung, eine Presspassung, eine Klebeverbindung, Löten, Verschrauben oder eine beliebige andere Befestigungstechnologie erfolgen.

Grundsätzlich möglich ist, obwohl nicht Teil der vorliegenden Erfindung, dass die Längsachsen 19, 20 radial zu der Längsachse x des Rohrkörpers 10 angeordnet sind (und bspw. auch in einer gemeinsamen Ebene angeordnet sind). Die Fig. 2 bis 5 zeigen allerdings ein Ausführungsbeispiel, bei welchem dies nicht der Fall ist. Vielmehr bilden die Längsachsen 19, 20 in einer x-y-Ebene zu einer Querachse y des Rohrkörpers 10 einen Winkel α (vgl. Fig. 4). Hierbei sind die Längsachsen 19, 20 aber nicht parallel zueinander in der x-y-Ebene orientiert, sondern mit entgegengesetztem Orientierungssinn um den Winkel α gegenüber der Querachse y geneigt. Somit bilden die Längsachsen 19, 20 eine Art V, wobei infolge der Abstände 25 der Scheitel des V abseits der Längsachse x und unter Umständen auch außerhalb des Rohrkörpers 10 liegt.

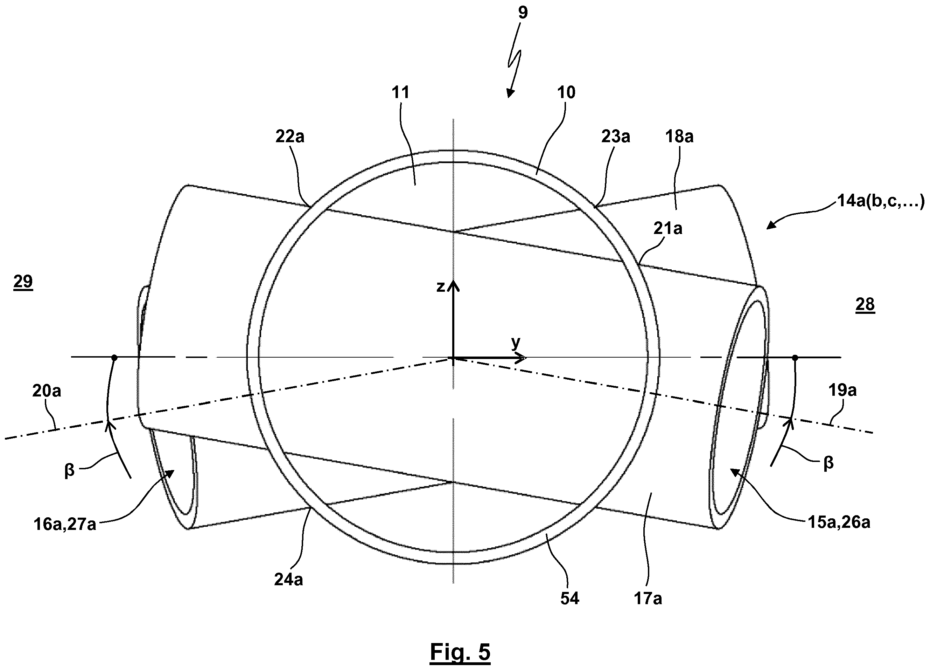

Darüber hinaus bilden die Längsachsen 19, 20 in einer Projektion in eine y-z-Ebene gegenüber eine Querachse y jeweils einen Winkel β (vgl. Fig. 5). Auch hier sind die Längsachsen 19, 20 gegenüber der Querachse mit unterschiedlichem Richtungssinn geneigt, so dass die Längsachsen ebenfalls ein V bilden, dessen Scheitel im Bereich der Längsachse x angeordnet ist.

In der x-y-Ebene trennt die Längsachse x des Rohrkörpers 10 eine obere Halbebene 28 von einer unteren Halbebene 29. Die Wärmeabsorptionselemente 1, welche in den Hülsen 17 angeordnet sind, erstrecken sich vorrangig, insbesondere mit ihren Verdampfern 6, in der oberen Halbebene 28, während sich die Wärmeabsorptionselemente 1, welche in den Hülsen 18 gehalten sind, vorrangig, insbesondere mit ihren Verdampfers 6, in der unteren Halbebene 29 erstrecken.

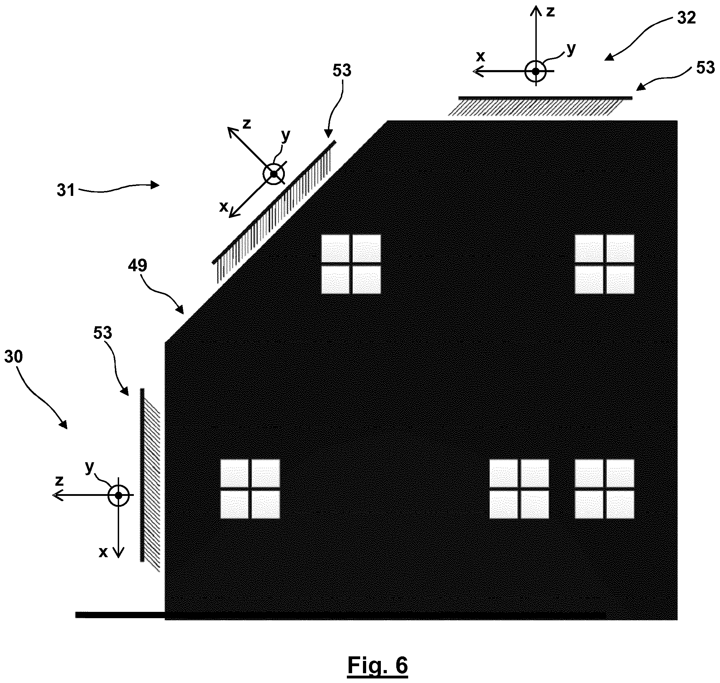

Wird das Solarkollektor-Sammelrohr 9 an einer Fassade vertikal derart montiert, dass die x-y-Ebene parallel zur Fassade orientiert ist (oder maximal unter einem Winkel von 10° oder 5° gegenüber der vertikalen Fassade geneigt ist) und die Längsachse x mit dem Richtungssinn vertikal nach unten orientiert ist, erstrecken sich von den Hülsen 17, 18 die Wärmeabsorptionselemente 1 infolge des Winkels α nach unten, so dass diese schwerkraftgetrieben arbeiten (s. Montageausrichtung 30 in **Fig. 6**). Erfolgt hingegen eine Montage des Solarkollektors an einer horizontalen Fläche, insbesondere einem Flachdach, ist die x-y-Ebene parallel zu dieser Fläche orientiert (oder maximal unter einem Winkel von 10° oder 5° gegenüber der horizontalen Fläche geneigt) (s. Montageausrichtung 32 in Fig. 6). Auch in diesem Fall können die in den Hülsen 17, 18 angeordneten Wärmeabsorptionselemente 1 schwerkraftbetrieben arbeiten, da sich diese von den Hülsen 17, 18 infolge der Winkel β nach unten erstrecken. Auch für einen beliebigen anderen Winkel (s. Montageausrichtung 31 in Fig. 6) ergibt sich infolge der Winkel α, β immer eine Neigung der Wärmeabsorptionselemente 1, so dass diese schwerkraftbetrieben arbeiten können.

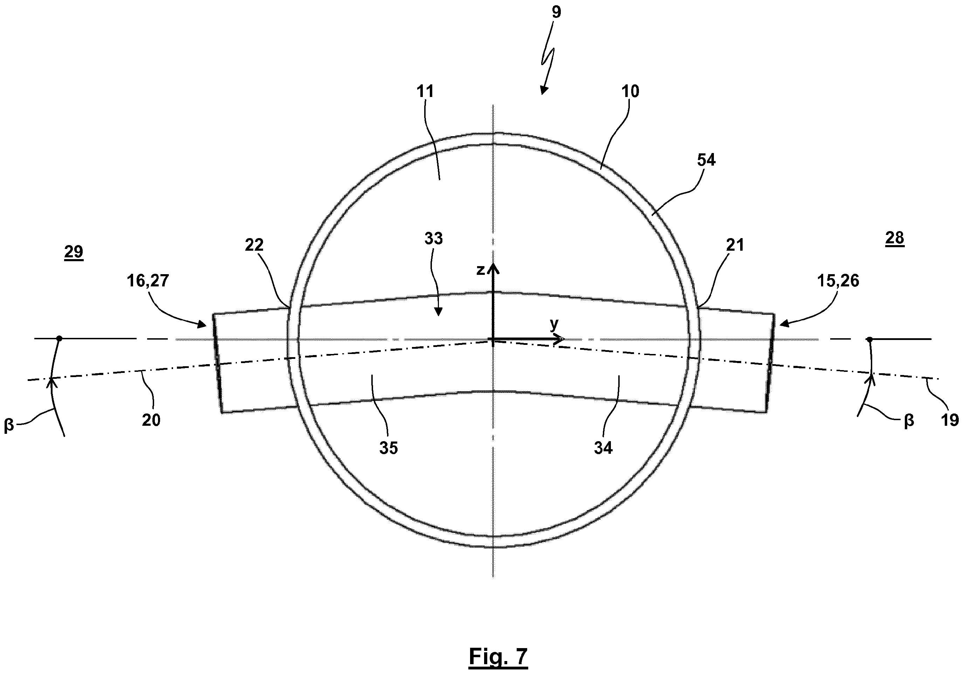

**Fig. 7** zeigt eine abgewandelte Ausführungsform, bei welcher anstelle der unterschiedlich orientierten Hülsen 17, 18 gleiche Hülsen 33 Einsatz finden. In diesem Fall sind die Hülsen 33 aber abgewinkelt derart, dass Hülsenteile 34, 35 gegenüber der Querachse y jeweils um den Winkel β abgewinkelt sind. In diesem Fall bildet die Hülse 33 jeweils mit einem Hülsenteil 34, 35 eine Aufnahme 15, 16 mit einer Einführ-Ausnehmung 26, 27, so dass von beiden Seiten jeweils ein Wärmeabsorptionselement 1 in die abgewinkelte Hülse 33 eingeschoben werden kann. Die derart in die Einführ-Ausnehmungen 26, 27 eingeschoben und hierin gehaltenen Wärmeabsorptionselemente 1 erstrecken sich in diesem Fall allenfalls bis zur Mitte der Axialerstreckung der Hülsen 33. Dies hat zur Folge, dass auf den unterschiedlichen Seiten des Rohrkörpers 10 jeweils gleiche Öffnungen 21 bzw. 22 bereitgestellt werden müssen.

Während für das Ausführungsbeispiel gemäß Fig. 2 bis 5 erforderlich war, dass die Wärmeabsorptionselemente 1 auf den unterschiedlichen Seiten des Solarkollektor-Sammelrohrs 9 mit einem Versatz entsprechend dem Abstand 25 zu den Wärmeabsorptionselementen 1 auf der anderen Seite des Rohrkörpers 10 angeordnet werden müssen, können für das Ausführungsbeispiel gemäß Fig. 7 die Wärmeabsorptionselemente 1 auf den unterschiedlichen Seiten des Rohrkörpers 10 ohne derartigen Versatz angeordnet werden.

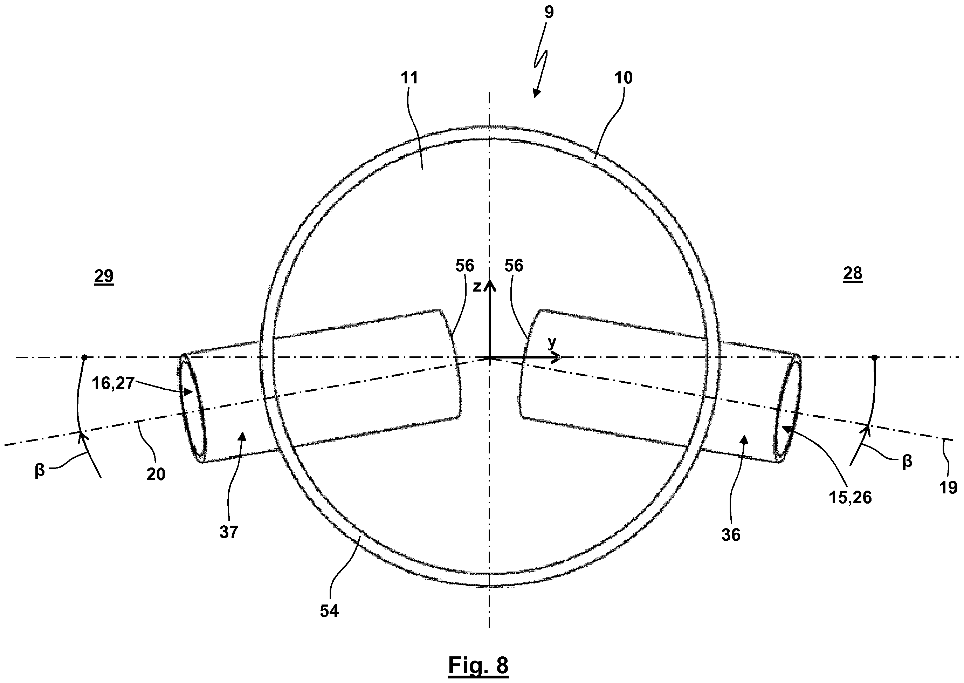

**Fig. 8** zeigt eine weitere Ausführungsform, für welche nicht eine abgewinkelte Hülse 33 mit verbundenen Hülsenteilen 34, 35 Einsatz finden, sondern vielmehr auf beiden Seiten des Rohrkörpers 10 Hülsen 36, 37 Einsatz finden, die sich nicht ganz bis zur Längsachse x oder x-z-Ebene des Rohrkörpers 10 in den Innenraum 11 erstrecken und aus dem Rohrkörper 10 herausstehen. Um zu vermeiden, dass (insbesondere auch für den Fall, dass kein Wärmeabsorptionselement 1 in den Hülsen 36, 37 angeordnet ist) Fluid aus dem Innenraum 11 über die Hülsen 36, 37 austreten kann, sind die Hülsen 36, 37(vorzugsweise im innenliegenden Endbereich der Hülsen 36, 37) mit einem Verschluss 56 verschlossen. Hierbei können Paare von Hülsen 36, 37 ohne oder mit Versatz zueinander angeordnet sein.

Auch für die Ausführungsformen gemäß Fig. 7 und 8 sind mehrere Paare von Aufnahmen in Richtung der Längsachse x verteilt an dem Rohrkörper 10 angeordnet.

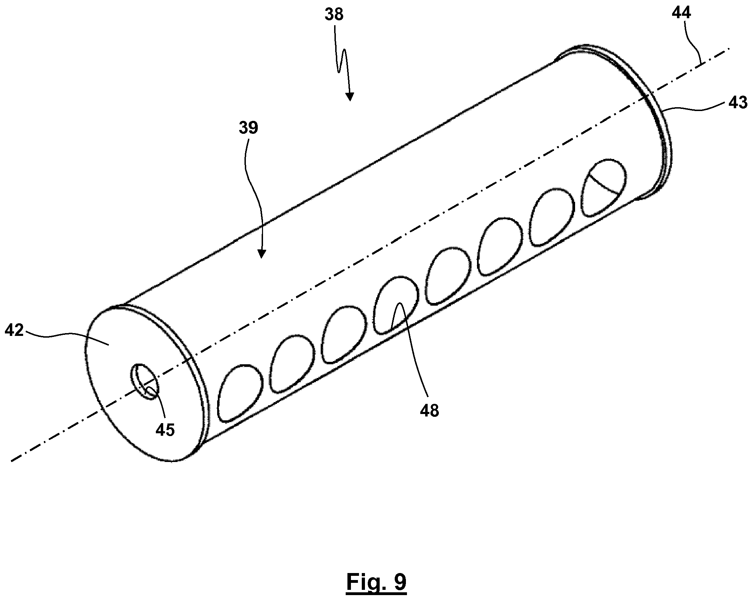

**Fig. 9** zeigt ein Gehäuse 38 mit einem hohlzylindrischen Grundkörper 39, welcher mit zwei Halbschalen 40, 41 ausgebildet sein kann. Stirnseitig ist der Grundkörper 39 über Deckel 42, 43 verschlossen, welche koaxial zur Längsachse 44 orientierte Durchgangsbohrungen 45 aufweisen.

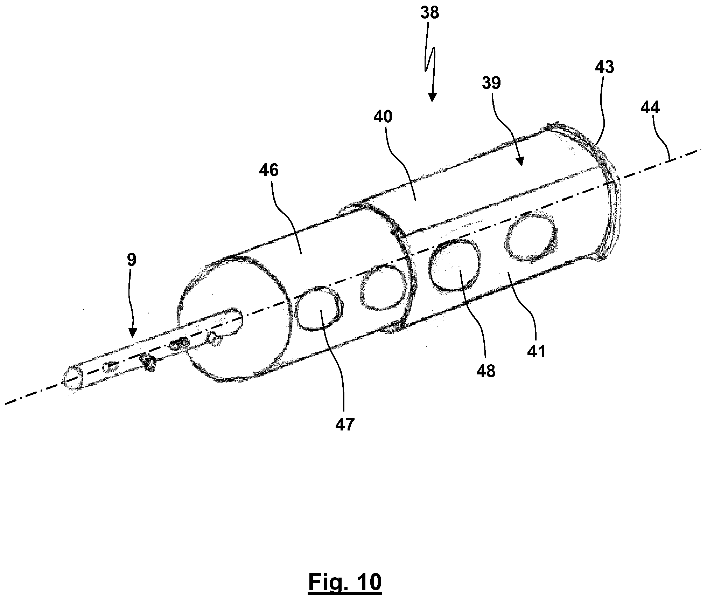

Wie in **Fig. 10** zu erkennen ist, kann in dem Gehäuse 38 ein Solarkollektor-Sammelrohr 9 angeordnet werden, wobei Endbereiche des Rohrkörpers 10 (oder mit diesen verbundene Anschlussleitungen) sich durch die Durchgangsbohrungen 45 erstrecken können. In dem Gehäuse 38 ist der Zwischenraum zwischen dem Solarkollektor-Sammelrohr 9 und dem Gehäuse 38 ausgekleidet mit einem thermischen Isoliermaterial 46. Sowohl das thermische Isoliermaterial 46 als auch das Gehäuse 38 verfügen auf beiden Seiten von der Längsachse 44 über Ausnehmungen 47, 48, durch die in die Aufnahmen 15,16 des Solarkollektor-Sammelrohrs 9 eingeführten und darin gehaltenen Wärmeabsorptionselemente 1 durch das thermische Isoliermaterial 46 und das Gehäuse 38 hindurchtreten können, so dass sich zumindest die Verdampfer 6 der Wärmeabsorptionselemente 1 außerhalb des Gehäuse 38 befinden und der Sonnenstrahlung ausgesetzt werden können.

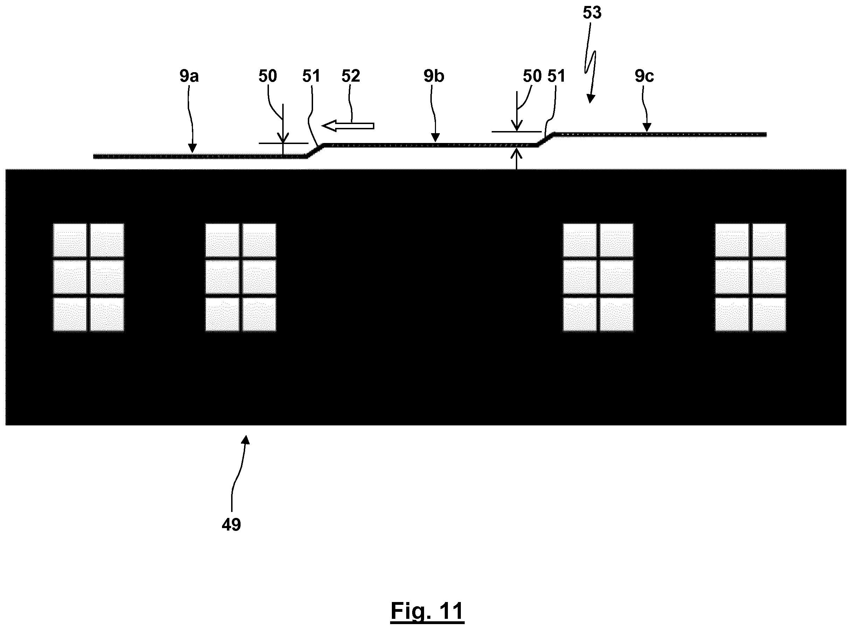

**Fig. 11** zeigt ein Gebäude 49, auf dessen Dach mehrere Solarkollektor-Sammelrohre 9a, 9b, 9c in fluidischer Reihenschaltung angeordnet sind. Die Solarkollektor-Sammelrohre 9a, 9b, 9c sind jeweils mit ihren Längsachsen x horizontal orientiert oder lediglich mit einem kleinen Winkel γ gegenüber der Horizontalen geneigt. Benachbarte Solarkollektor-Sammelrohre 9a, 9b bzw. 9b, 9c verfügen über einen Höhenversatz 50. Der Höhenversatz 50 ist über ein fluidisches Verbindungselement 51 überbrückt. Fluid kann somit in eine Strömungsrichtung 52 einen mit den Solarkollektor-Sammelrohren 9a, 9b, 9c gebildeten Solarkollektor 53 durchströmen, nämlich von dem Solarkollektor-Sammelrohr 9c über das fluidische Verbindungselement 51 zu dem Solarkollektor-Sammelrohr 9b sowie hiervon über das nächste fluidische Verbindungselement 51 zu dem Solarkollektor-Sammelrohr 9a strömen. Auch ohne Betrieb eine Pumpe kann eine derartige Strömung zum Entleeren des Solarkollektors 53 erfolgen, so dass der Solarkollektor 53 als Drain-Back-System ausgebildet sein kann.

Für das Ausführungsbeispiel in Fig. 2 bis 5 bilden die Einführ-Ausnehmungen 26a, 26b, ... eine Reihe 57 auf einer Seite des Rohrkörpers 10, welche der Halbebene 28 entspricht, während die Einführ-Ausnehmungen 27a, 27b, ...eine Reihe 58 von Einführ-Ausnehmungen auf der anderen Seite des Rohrkörpers 10, welche der Halbebene 29 entspricht, bilden. Für das Ausführungsbeispiel gemäß Fig. 7 sind die Reihen 57, 58 jeweils von einem Hülsenteil 34, 35 ausgebildet, während diese für das Ausführungsbeispiel gemäß Fig. 8 von den Hülsen 36, 37 ausgebildet werden.

Vorzugsweise bestehen die Hülsen 17, 18, 33 oder 36, 37 aus Kupfer, Aluminium, Stahl oder einem anderen wärmeleitenden Material.

### BEZUGSZEICHENLISTE

- 1: Wärmeabsorptionselement
- 2: Wärmerohr
- 3: Vakuumröhre
- 4: Kondensator
- 5: Mantelfläche
- 6: Verdampfer
- 7: Kupferrohr
- 8: Kupferrohr
- 9: Solarkollektor-Sammelrohr
- 10: Rohrkörper
- 11: Innenraum
- 12: Einlass
- 13: Auslass
- 14: Paar
- 15: Aufnahme
- 16: Aufnahme
- 17: Hülse
- 18: Hülse
- 19: Längsachse
- 20: Längsachse
- 21: Öffnung
- 22: Öffnung
- 23: Öffnung
- 24: Öffnung
- 25: Abstand
- 26: Einführ-Ausnehmung
- 27: Einführ-Ausnehmung
- 28: Halbebene
- 29: Halbebene
- 30: Montageausrichtung
- 31: Montageausrichtung
- 32: Montageausrichtung
- 33: Hülse
- 34: Hülsenteil
- 35: Hülsenteil
- 36: Hülse
- 37: Hülse
- 38: Gehäuse
- 39: Grundkörper
- 40: Halbschale
- 41: Halbschale
- 42: Deckel
- 43: Deckel
- 44: Längsachse
- 45: Durchgangsbohrung
- 46: thermisches Isoliermaterial
- 47: Ausnehmung
- 48: Ausnehmung
- 49: Gebäude
- 50: Höhenversatz
- 51: Verbindungselement
- 52: Strömungsrichtung
- 53: Solarkollektor
- 54: Wandung
- 55: Einführbereich
- 56: Verschluss
- 57: Reihe
- 58: Reihe

## Patentansprüche

1. Solarkollektor-Sammelrohr (9) mit
a) einem Rohrkörper (10), welcher mit einer Wandung (54) einen Innenraum (11) begrenzt, in welchen ein Einlass (12) des Rohrkörpers (10) sowie ein Auslass (13) des Rohrkörpers (10) münden, und
b) mehreren Aufnahmen (15, 16) für Wärmeabsorptionselemente (1),
c) wobei die Aufnahmen (15, 16) in Richtung einer Längsachse x verteilt an dem Rohrkörper (10) angeordnet sind,
d) die Aufnahmen (15, 16) eine Hülse (17, 18; 33; 36, 37) aufweisen, die
da) sich unter Abdichtung durch mindestens eine Öffnung (21, 22, 23, 24) der Wandung (54) des Rohrkörpers (10) erstreckt,
db) an der Wandung (54) des Rohrkörpers (10) befestigt ist und
dc) eine Einführ-Ausnehmung (26, 27) aufweist, und
e) die Einführ-Ausnehmung (26, 27)
ea) eine Geometrie aufweist, die korrespondierend zu der Geometrie des Wärmeabsorptionselements (1) in einem Einführbereich (55) des Wärmeabsorptionselements (1) ausgebildet ist,
eb) nach außen offen ist, so dass in diese das Wärmeabsorptionselement (1) einführbar ist, und
ec) fluidisch von dem Innenraum (11) entkoppelt ist,
**dadurch gekennzeichnet, dass**
f) eine Längsachse (19, 20) der Einführ-Ausnehmung (26, 27)
fa) in einer Projektion in eine x-y-Ebene einen Winkel α gegenüber einer Querachse y des Rohrkörpers (10) bildet und
fb) in einer Projektion in eine y-z-Ebene einen Winkel β gegenüber der Querachse y des Rohrkörpers (10) bildet, wobei z eine vertikal zu der Längsachse x sowie der Querachse y orientierte Hochachse ist, und
g) zwei Reihen (57, 58) von Einführ-Ausnehmungen (26, 27) auf gegenüberliegenden Seiten des Rohrkörpers (10) angeordnet sind, wobei
ga) die beiden Reihen (57, 58) in Richtung der Längsachse x mit einem Abstand (25) versetzt zueinander angeordnet sind oder
gb) die Hülsen (33) abgewinkelt sind und Hülsenteile (34, 35) aufweisen, die gegenüber der Querachse y jeweils um den Winkel β abgewinkelt sind, wobei die Hülsen (33) jeweils mit einem Hülsenteil (34, 35) eine Aufnahme (15, 16) mit einer Einführ-Ausnehmung (26, 27) bilden, so dass von beiden Seiten jeweils ein Wärmeabsorptionselement (1) in die abgewinkelte Hülse (33) eingeschoben werden kann.

2. Solarkollektor-Sammelrohr (9) nach Anspruch 1, **dadurch gekennzeichnet, dass** das Wärmeabsorptionselement (1) ein Wärmerohr (2) oder eine Vakuumröhre (3) ist.

3. Solarkollektor-Sammelrohr (9) nach Anspruch 1 oder 2, **dadurch gekennzeichnet, dass** die Einführ-Ausnehmung (26, 27) der Hülse (36, 37) dadurch fluidisch von dem Innenraum (11) entkoppelt ist, dass die Hülse (36, 37) in einem in dem Innenraum (11) angeordneten Endbereich mit einem Verschluss (56) geschlossen ist.

4. Solarkollektor-Sammelrohr (9) nach Anspruch 1 oder 2, **dadurch gekennzeichnet, dass** die Einführ-Ausnehmung (26, 27) der Hülse (17, 18; 33) dadurch fluidisch von dem Innenraum (11) entkoppelt ist, dass sich die Hülse (17, 18; 33)
a) von einer Seite des Rohrkörpers (10) durch eine Öffnung (21, 23) des Rohrkörpers (10) in den Innenraum (11),
b) durch den Innenraum (11) und
c) durch eine gegenüberliegende Öffnung (22, 24) des Rohrkörpers (10) wieder aus dem Rohrkörper (10) heraus
erstreckt.

5. Solarkollektor-Sammelrohr (9) nach einem der vorhergehenden Ansprüche, **dadurch gekennzeichnet, dass** die Hülsen (17, 18; 33; 36, 37) an dem Rohrkörper (10) über
a) eine Verschweißung,
b) eine Klebeverbindung,
c) eine Pressverbindung,
d) eine Klemmverbindung und/oder
e) eine Verlötung
befestigt sind.

6. Solarkollektor-Sammelrohr (9) nach einem der vorhergehenden Ansprüche, **dadurch gekennzeichnet, dass** der Rohrkörper (10) in mindestens einem Endbereich verjüngt ausgebildet ist.

7. Verwendung von baugleichen Solarkollektor-Sammelrohren (9) nach einem der Ansprüche 1 bis 6
a) sowohl für eine Montage mit ungefähr horizontaler Ausrichtung der Längsachse x des Rohrkörpers (10) des Solarkollektor-Sammelrohrs (9)
b) als auch für eine Montage mit ungefähr vertikaler Ausrichtung der Längsachse x des Rohrkörpers (10) des Solarkollektor-Sammelrohrs (9).

8. Solarkollektor-Baugruppe mit einem Solarkollektor-Sammelrohr (9) nach einem der Ansprüche 1-6 und in den Hülsen (17, 18; 33; 36, 37) des Solarkollektor-Sammelrohrs (9) angeordneten Wärmeabsorptionselementen (1).

9. Solarkollektor-Baugruppe nach Anspruch 8, **dadurch gekennzeichnet, dass**
a) das Solarkollektor-Sammelrohr (9) in einem Gehäuse (38) aufgenommen ist und
b) sich die in den Hülsen (17, 18; 33; 36, 37) des Solarkollektor-Sammelrohrs (9) aufgenommenen Wärmeabsorptionselemente (1) durch Ausnehmungen (48) des Gehäuses (38) hindurch erstrecken.

10. Solarkollektor-Baugruppe nach Anspruch 8 oder 9, **dadurch gekennzeichnet, dass** sich die Wärmeabsorptionselemente (1) auf unterschiedlichen Seiten des Solarkollektor-Sammelrohrs (9) erstrecken.

11. Solarkollektor-Baugruppe nach Anspruch 9 oder 10, **dadurch gekennzeichnet, dass** zwischen dem Solarkollektor-Sammelrohr (9) und dem Gehäuse (38) ein thermisches Isoliermaterial (46) angeordnet ist.

12. Solarkollektor-Baugruppe nach einem der Ansprüche 8 bis 11, **dadurch gekennzeichnet, dass**
a) mehrere Solarkollektor-Sammelrohre (9) in fluidischer Reihenschaltung angeordnet sind,
b) die Solarkollektor-Sammelrohre (9) jeweils unter einem Winkel γ gegenüber der Horizontalen angeordnet sind, der kleiner ist als 10°, und
c) benachbarte Solarkollektor-Sammelrohre (9) mit einem Höhenversatz (50) angeordnet sind, welcher über ein fluidisches Verbindungselement (51) überbrückt ist.

## Claims

1. Solar collector collecting pipe (9) comprising
a) a pipe body (10) which by a wall (54) limits an interior space (11) into which an inlet (12) of the pipe body (10) and an outlet (13) of the pipe body (10) open and
b) a plurality of accommodations (15, 16) for heat absorption elements (1),
c) the accommodations (15, 16) being arranged at the pipe body (10) at locations distributed along a longitudinal axis x,
d) the accommodations (15, 16) comprising a sleeve (17, 18; 33; 36, 37) which
da) extends under the provision of a sealing effect through at least one opening (21, 22, 23, 24) of the wall (54) of the pipe body (10),
db) is fixed at the wall (54) of the pipe body (10) and
dc) comprises an insertion recess (26, 27), and
e) the insertion recess (26, 27)
ea) comprising a geometry corresponding to the geometry of the heat absorption element (1) in an insertion region (55) of the heat absorption element (1),
eb) being open in outer direction such that it is possible to introduce the heat absorption element (1) into the same and
ec) being fluidically decoupled from the interior space (11),
**characterised in that**
f) a longitudinal axis (19, 20) of the insertion recess (26, 27)
fa) in a projection into an x-y-plane forms an angle α relative to a transverse axis y of the pipe body (10) and
fb) in a projection into a y-z-plane forms an angle β relative to the transverse axis y of the pipe body (10) where z is an upright axis having an orientation vertical to the longitudinal axis x and to the transverse axis y and
g) two rows (57, 58) of insertion recesses (26, 27) are arranged on opposite sides of the pipe body (10) where
ga) the two rows (57, 58) are arranged with an offset to each other in the direction of the longitudinal axis x with a distance (25) or
gb) the sleeves (33) are angled and comprise sleeve parts (34, 35) which are each inclined by the angle β relative to the transverse axis y, the sleeves (33) with each of the sleeve parts (34, 35) forming an accommodation (15, 16) with an insertion recess (26, 27) such that it is possible to introduce a respective heat absorption element (1) from both sides into the angled sleeve (33).

2. Solar collector collecting pipe (9) of claim 1, **characterised in that** the heat absorption element (1) is a heat pipe (2) or a vacuum tube (3).

3. Solar collector collecting pipe (9) of claim 1 or 2, **characterised in that** the insertion recess (26, 27) of the sleeve (36, 37) is fluidically decoupled from the interior space (11) by that the sleeve (36, 37) is closed by a closure (56) in the end region which is arranged in the interior space (11).

4. Solar collector collecting pipe (9) of claim 1 or 2, **characterised in that** the insertion recess (26, 27) of the sleeve (17, 18; 33) is fluidically decoupled from the interior space by that the sleeve (17, 18; 33) extends
a) from one side of the pipe body (10) through an opening (21, 23) of the pipe body (10) into the interior space (11),
b) through the interior space (11) and
c) through an opposite opening (22, 24) of the pipe body (10) again out of the pipe body (10).

5. Solar collector collecting pipe (9) of one of the preceding claims, **characterised in that** the sleeves (17, 18; 33; 36, 37) are fixed at the pipe body (10) by
a) a welding,
b) an adhesive bond,
c) a pressing or crimping connection,
d) a clamping connection and/or
e) a soldering.

6. Solar collector collecting pipe (9) of one of the preceding claims, **characterised in that** the pipe body (10) has a tapering in at least one end region.

7. Use of solar collector collecting pipes (9) of one of claims 1 to 6 having the same construction both
a) for an assembly with an approximately horizontal orientation of the longitudinal axis x of the pipe body (10) of the solar collector collecting pipe (9)
b) as well as for an assembly with an approximately vertical orientation of the longitudinal axis x of the pipe body (10) of the solar collector collecting pipe (9).

8. Solar collector assembly comprising a solar collector collecting pipe (9) of one of claims 1 to 6 and heat absorption elements (1) which are arranged in the sleeves (17, 18; 33; 36, 37) of the solar collector collecting pipe (9).

9. Solar collector assembly of claim 8, **characterised in that**
a) the solar collector collecting pipe (9) is accommodated in a housing (38) and
b) heat absorption elements (1) accommodated in the sleeves (17, 18; 33; 36, 37) of the solar collector collecting pipe (9) extend through recesses (48) of the housing (38).

10. Solar collector assembly of claim 8 or 9, **characterised in that** the heat absorption elements (1) extend on different sides of the solar collector collecting pipe (9).

11. Solar collector assembly of claim 9 or 10, **characterised in that** a thermic insulating material (46) is arranged between the solar collector collecting pipe (9) and the housing (38).

12. Solar collector assembly of one of claims 8 to 11, **characterised in that**
a) a plurality of solar collector collecting pipes (9) is arranged in a fluidic series connection,
b) the solar collector collecting pipes (9) are each arranged with an angle γ relative to the horizontal plane, the angle γ being smaller than 10° and
c) adjacent solar collector collecting pipes (9) are arranged with an offset in vertical direction (50) which is bridged by a fluidic connecting element (51).

## Revendications

1. Tube de collecte de collecteur solaire (9) avec
a) un corps de tube (10), qui délimite, avec une paroi (54), un espace interne (11), dans lequel débouchent une entrée (12) du corps de tube (10) ainsi qu'une sortie (13) du corps de tube (10) et
b) plusieurs logements (15, 16) pour des éléments d'absorption thermique (1),
c) les logements (15, 16) étant disposés en direction d'un axe longitudinal x de manière répartie sur le corps de tube (10),
d) les logements (15, 16) comprennent un manchon (17, 18 ; 33 ; 36, 37) qui
da) s'étend, avec une étanchéification, à travers au moins une ouverture (21, 22, 23, 24) de la paroi (54) du corps de tube (10),
db) est fixé à la paroi (54) du corps de tube (10) et
dc) comprend un évidement d'introduction (26, 27) et
e) l'évidement d'introduction (26, 27)
ea) présente une géométrie qui correspond à la géométrie de l'élément d'absorption thermique (1) dans une zone d'introduction (55) de l'élément d'absorption thermique (1),
eb) est ouvert vers l'extérieur, de façon à ce que l'élément d'absorption thermique (1) puisse être introduit dans celui-ci,
ec) est découplé fluidiquement de l'espace interne (11),
**caractérisé en ce que**
f) un axe longitudinal (19, 20) de l'évidement d'introduction (26, 27)
fa) forme, dans une projection sur un plan x-y, un angle α par rapport à un axe transversal y du corps de tube (10) et
fb) forme, dans une projection sur un plan y-z, un angle β par rapport à l'axe transversal y du corps de tube (10), z étant un axe vertical orienté verticalement par rapport à l'axe longitudinal x ainsi qu'à l'axe transversal y et
g) deux rangées (57, 58) d'évidements d'introduction (26, 27) sont disposées sur des côtés opposés du corps de tube (10),
ga) les deux rangées (57, 58) étant disposées de manière décalée entre elles en direction de l'axe longitudinal x avec une distance (25) ou
gb) les manchons (33) étant inclinés et comprenant des parties de manchons (34, 35) qui sont inclinés par rapport à l'axe transversal y de l'angle β, les manchons (33) formant chacun avec une partie de manchon (34, 35), un logement (15, 16) avec un évidement d'introduction (26, 27), de façon à ce que, de chacun des deux côtés, un élément d'absorption thermique (1) puisse être introduit dans le manchon incliné (33).

2. Tube de collecte de collecteur solaire (9) selon la revendication 1, **caractérisé en ce que** l'élément d'absorption thermique (1) est un tube thermique (2) ou un tube à vide (3).

3. Tube de collecte de collecteur solaire (9) selon la revendication 1 ou 2, **caractérisé en ce que** l'évidement d'introduction (26, 27) du manchon (36, 37) est découplé fluidiquement de l'espace interne (11) grâce au fait que le manchon (36, 37) est fermé, dans la zone d'extrémité disposée dans l'espace interne (11), avec une fermeture (56).

4. Tube de collecte de collecteur solaire (9) selon la revendication 1 ou 2, **caractérisé en ce que** l'évidement d'introduction (26, 27) du manchon (17, 18 ; 33) est découplé fluidiquement de l'espace interne (11) grâce au fait que le manchon (17, 18 ; 33) s'étend
a) d'un côté du corps de tube (10) à travers une ouverture (21, 23) du corps de tube (10) vers l'espace interne (11),
b) à travers l'espace interne (11) et
c) à travers une ouverture opposée (22, 24) du corps de tube (10), à nouveau hors du corps de tube (10).

5. Tube de collecte de collecteur solaire (9) selon l'une des revendications précédentes, **caractérisé en ce que** les manchons (17, 18 ; 33 ; 36, 37) sont reliés au corps de tube (10) par
a) une soudure,
b) une liaison adhésive,
c) une liaison par pressage,
d) une liaison par serrage et/ou
e) un brasage.

6. Tube de collecte de collecteur solaire (9) selon l'une des revendications précédentes, **caractérisé en ce que** le corps de tube (10) est conçu de manière conique dans au moins une zone d'extrémité.

7. Utilisation de tubes de collecte de collecteur solaire (9) de conceptions similaires selon l'une des revendications 1 à 6
a) aussi bien pour le montage avec une orientation approximativement horizontale de l'axe longitudinal x du corps de tube (10) du tube de collecte de collecteur solaire (9)
b) que pour un montage avec une orientation approximativement verticale de l'axe longitudinal x du corps de tube (10) du tube de collecte de collecteur solaire (9).

8. Sous-ensemble de collecteur solaire avec un tube de collecte de collecteur solaire (9) selon l'une des revendications 1 à 6 et éléments d'absorption thermique (1) disposé dans les manchons (17, 18 ; 33 ; 36, 37) du tube de collecte de collecteur solaire (9).

9. Sous-ensemble de collecteur solaire selon la revendication 8, **caractérisé en ce que**
a) le tube de collecte du collecteur solaire (9) est logé dans un boîtier (38) et
b) les éléments d'absorption thermique (1) logés dans les manchons (17, 18 ; 33 ; 36, 37) du tube de collecte de collecteur solaire (9) s'étendent à travers des évidements (48) du boîtier (38).

10. Sous-ensemble de collecteur solaire selon la revendication 8 ou 9, **caractérisé en ce que** les éléments d'absorption thermique (1) s'étendent sur différents côtés du tube de collecte de collecteur solaire (9).

11. Sous-ensemble de collecteur solaire selon la revendication 9 ou 10, **caractérisé en ce que**, entre le tube de collecte de collecteur solaire (9) et le boîtier (38), est disposé un matériau thermiquement isolant (46).

12. Sous-ensemble de collecteur solaire selon l'une des revendications 8 à 11, **caractérisé en ce que**
a) plusieurs tubes de collecte de collecteur solaire (9) sont branchés fluidiquement en série,
b) les tubes de collecte de collecteur solaire (9) sont disposés chacun avec un angle γ par rapport à l'horizontale, qui est inférieur à 10° et
c) des tubes de collecte de collecteur solaire (9) adjacents sont disposés avec un décalage en hauteur (50) qui est ponté par un élément de liaison fluidique (51).
